Europäisches Patentamt

(19) European Patent Office

Office européen des brevets

(11) Publication number: **0 328 511**
**A1**

# EUROPEAN PATENT APPLICATION

(21) Application number: 89890033.7

(22) Date of filing: 08.02.89

(51) Int. Cl.⁴: **F 16 G 5/00**

(30) Priority: 09.02.88 US 153944

(43) Date of publication of application:
16.08.89 Bulletin 89/33

(84) Designated Contracting States:
AT BE CH DE FR GB IT LI LU NL SE

(71) Applicant: HIGHLAND INDUSTRIES, INC.
629 Green Valley Road Suite 300
Greensboro North Carolina 27408 (US)

(72) Inventor: McGee, James N.
500 Garden Loop Pleasant Garden
North Carolina 27313 (US)

(74) Representative: Haffner, Thomas M., Dr. et al
Patentanwaltskanzlei Dipl.-Ing. Adolf Kretschmer Dr.
Thomas M. Haffner Schottengasse 3a
A-1014 Wien (AT)

(54) Producing improved V-belt bare-back cover fabric.

(57) Fabric covered V-belts are produced which have a minimum co-efficient of friction on the outer surface (25). The cover fabric (22) is coated with elastomeric material on only a first surface (24). The elastomeric coating material does not penetrate the interstices of the fabric, and thus the second surface (25) of the fabric (opposite the first surface) is substantially devoid of elastomeric material. This is accomplished by applying the elastomeric coating material with a high viscosity (e.g. 40,000 cps-100,000 cps). The second surface of the fabric becomes the outer surface of the covered V-belt after the fabric is wrapped around the elastomeric material body (27) of the V-belt. During use, the outer surface fabric becomes slick, and has a small coefficient of friction, and thereby minimizes belt operating tension.

FIG. 3

EP 0 328 511 A1

Description

## PRODUCING IMPROVED V-BELT BARE-BACK COVER FABRIC

### BACKGROUND AND SUMMARY OF THE INVENTION

V-belts are widely used commercially for transmitting power by wedgingly engaging the complimentary shaped groove of a V-pulley. One common form of V-belt is a fabric covered V-belt, in which a body portion primarily of elastomeric material, and which may have reinforcing cords therein, is wrapped with a fabric.

It is known that it is desirable for the tension clutching type V-belt to have a low co-efficient of friction in order to minimize belt operating tension during clutching. Unfortunately, many fabric covered V-belts have a high co-efficient of friction on the outer surface. This is a result of elastomeric material which is friction calendered onto one side of the cover fabric. During calendering, rubber (or like elastomeric material) is forced through the fabric interstices to the surface of the opposite side of the fabric. This leaves sufficient rubber on the "unfrictioned" side of the fabric (which is on the outside of the V-belt after wrapping) to cause a heat build-up from an increased co-efficient of friction between the drive sleeve and the belt.

In order to avoid the problem of a high co-efficient of friction for the outer surface of the biased rubber treated fabric of a V-belt, only tightly woven fabrics of 8.0 oz. per square yard or greater are used for the cover fabric. However even use of such selected fabrics (which are relatively expensive) is not fully successful for many applications, such as for tension clutching arrangements. Another approach suggested, exemplary of many attempts to deal with this problem, is to provide in the outer cover a metallic material incorporated with the elastomeric material coating the cover fabric, so that a lower co-efficient of friction is provided on the outer surface of the covered V-belt.

According to the present invention, a method of producing a fabric covered V-belt -- and the fabric covered V-belt so produced -- are provided which simply yet effectively, and without any significant increase in cost, provides a fabric covered V-belt with minimal friction on the outer surface thereof. The basic feature according to the invention that allows production of a low friction outer surface fabric covered V-belt in a simple and effective manner is the treatment of the cover fabric with elastomeric material in such a way that the elastomeric material does not fill the fabric interstices. In use, then, when the belt warms up from work, the fabric on the outside gets slick (similar to a fabric being ironed with a flat iron), as compared to conventional rubber treated cover fabrics, which become "grabby" due to an increase in co-efficient of friction from the heat. The difference in the product according to the invention compared to the prior art is visually readily discernible since the bare-back cover fabric according to the invention will appear white, whereas the friction calendered cover fabric conventionally used will be gray as a result of elastomeric material penetrating the fabric interstices.

According to one aspect of the present invention, a covered V-belt having a low co-efficient of friction on the outer surface thereof is provided. The V-belt comprises a body portion primarily of elastomeric material, and a fabric portion wrapped around the body portion. The fabric portion has an inner surface coated with elastomeric material, engaging the body portion, and an outer surface substantially devoid of any elastomeric material, so that it becomes slick, with a low co-efficient of friction, during use. A wide variety of weights and types of fabric may be utilized. Both square woven and tubular woven fabrics may be utilized, having a weight between about 5 oz. per square yard to 10 oz. per square yard. The fabric can be made of polyester, nylon, rayon, Kevlar, or blends of two or more of these fibers. The maximum size of openings (size of interstices) for a fabric utilizable according to the invention is comparable to about a fabric with a 7.5/S yarn size at a 28x28 count per inch, with a fabric weight of 6.25 oz. per square yard. One particularly suitable fabric is one woven with 12.0/S yarn at a 50x50 count per inch, with a weight of 5.7 oz. per square yard. During manufacture of the fabric, the fabric is expanded to spread the angle at which the yarn crosses over so that it is greater than 90°, typically between 90° and 130°.

According to another aspect of the present invention, a method of producing a covered V-belt having a body primarily of elastomeric material covered with a fabric, is provided. The method steps comprise: (a) applying to a first surface of the fabric, having first and second opposite faces with interstices therebetween, a viscous elastomeric coating so that the elastomeric material covers the first surface but does not fill the interstices. This step is practiced preferably with a fabric with a weight between about 5-10 oz. per square yard, with the viscosity of the elastomeric coating in the range of 40,000-100,000 cps. Then, (b) wrapping the fabric around a V-belt with the first surface engaging the V-belt, so that the second surface forms the exterior of the covered V-belt.

In the preferred complete method of production of a covered V-belt according to the invention, a bias slit woven fabric is overfed at about 40% onto a tenter frame. The fabric width is expanded to spread the angle at the yarn crossover so that it is greater than 90°, within the range of about 90° -130°, and preferably about 110°. Then the fabric is coated on the top side only with a solvated neoprene cement, or like elastomeric material, having a viscosity in range of 40,000 cps-100,000 cps, preferably about 80,000 cps. (The coating may be applied with a 1/8 inch square coating knife over-roll.) The fabric is then dried in the tenter frame oven, cooled, and slit (and preferably batched into rolls at the exit of the tenter frame), and is ultimately used to wrap around a V-belt with the elastomeric material coated surface of the fabric engaging the V-belt.

It is the primary object of the present invention to provide a simple, effective, and versatile method for the production of covered V-belts, and the V-belts so produced. This and other objects of the invention will become clear from an inspection of the detailed description of the invention, and from the appended claims.


## BRIEF DESCRIPTION OF THE DRAWINGS


FIGURE 1 is a schematic representation of exemplary method steps in the practice of the method of the present invention;

FIGURE 2 is a top perspective view of a section of cover fabric according to the present invention, illustrated in a position in which the fabric is about to be wrapped around a V-belt;

FIGURE 3 is a cross-sectional view illustrating an exemplary embodiment of a fabric wrapped V-belt according to the invention; and

FIGURE 4 is a schematic view showing another exemplary method according to the invention, but only at the point where it differs from the method of FIGURE 1.


## DETAILED DESCRIPTION OF THE DRAWINGS

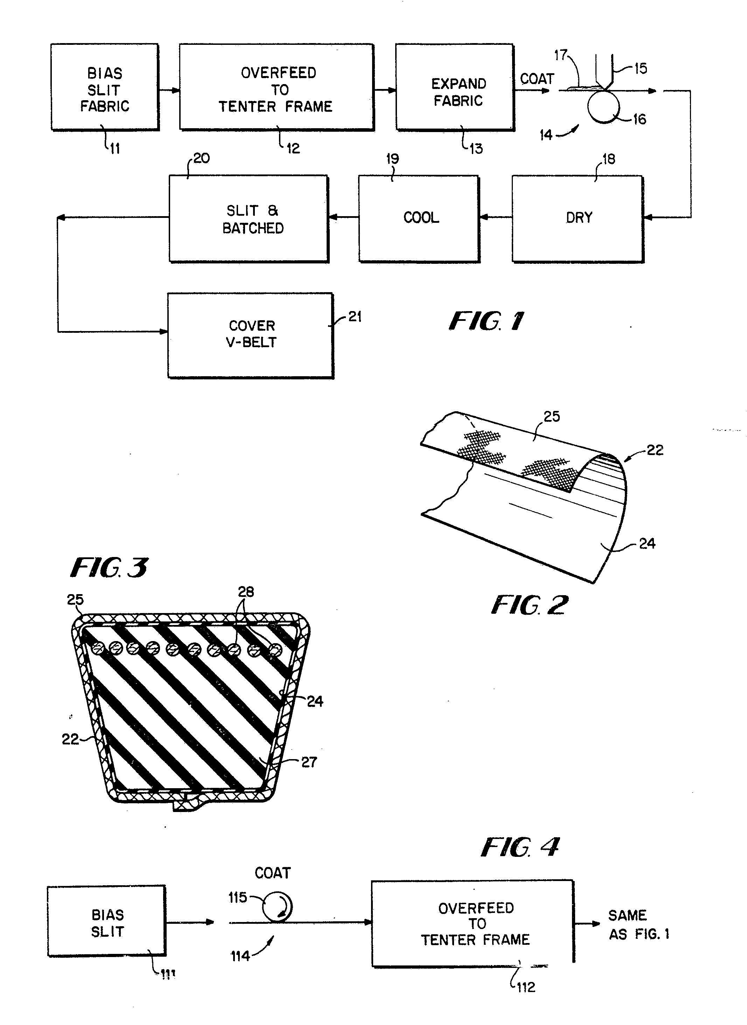

In the production of a low co-efficient of friction fabric covered V-belt according to the present invention, a woven fabric is bias slit in a conventional manner, as indicated by step 11 in FIGURE 1. According to a preferred method of the invention, the bias slit fabric is then overfed to a tenter frame as indicated at 12 in FIGURE 1. A typical overfeed would be about 40%. The angle of the yarn crossover is preferably between 90°-130°, and in order to spread the angle to greater than 90°, the fabric is expanded widthwise at 13 in the tenter frame or the like. Typically the angle of the yarns at crossover would be expanded to about 110°.

According to the invention, the expanded fabric is coated on only one surface (e.g. the top side) thereof with an elastomeric material, such as a solvated neoprene cement. This coating, generally indicated at 14 in FIGURE 1, may be accomplished utilizing a 1/8 inch square coating knife 15 over a roll 16 in the tenter frame, with the viscose elastomeric material being indicated at 17. The material 17 has sufficient viscosity so that the interstices of the fabric are not penetrated. Typically, the viscosity of the elastomeric material 17 would be between about 40,000-100,000 cps, with a preferred viscosity of about 80,000 cps. After coating, the second surface of the fabric (e.g. the bottom surface), opposite the coated surface, is substantially devoid of elastomeric material. The fabric is then dried in the tenter frame oven at 18 and cooled at 19, as it leaves the tenter frame, is slit and batched at 20, and is then used to wrap around and thereby cover a V-belt, as indicated at 21.

An exemplary fabric 22 according to the invention for covering a V-belt has a first inner, surface 24 thereof which has an elastomeric material coating thereon. The surface 24 is adapted to engage the outer periphery of a V-belt to be wrapped. The second, outer surface 25 of the fabric 22 is substantially devoid of elastomeric material, the elastomeric material not having penetrated the interstices extending between the first and second surfaces of the fabric. The surface 25 forms the outer covering of the V-belt.

An exemplary V-belt according to the invention is illustrated in FIGURE 3. The V-belt has a body 27 primarily of elastomeric material, which typically would be reinforced as indicated by cords 28. The elements 27, 28 may be of any conventional type. As seen in FIGURE 3, the fabric 22 according to the invention wraps the body 27, with the surface 24 of the fabric 22 engaging the outer periphery of the body 27, and with the surface 25 providing the exterior of the V-belt. Since there is substantially no elastomeric material at the surface 25, the surface 25 appears white (the fabric color), rather than gray (as in conventional friction calendered fabric). The surface 25 becomes slick during use, and has a low co-efficient of friction, so that the belt does not grab or stick during tension clutching.

FIGURE 4 illustrates a modification of the method of FIGURE 1, in which similar steps are indicated by the same reference numeral only preceded by a "1". In the method of FIGURE 4, the fabric again is bias slit as is conventional, at 111, but prior to overfeed to the tenter frame at 112, the fabric is coated at 114 with the viscous elastomeric material. In this embodiment, a neoprene solvated to a viscosity of about 80,000 cps is applied to the one surface (e.g. the top surface) of the fabric by a roll type applicator 115 in front of the pin tenter frame. After step 112, the fabric is expanded, dried, cooled, slit and batched, and used to cover a V-belt just as in steps 13 and 18 through 21 of FIGURE 1.

The invention is applicable to fabrics having a wide variety of fabric weights. For example, fabric weights from about 5.0 oz. per square yard to about 10 oz. per square yard will perform well in accomplishing the desired results according to the invention. The fabric is preferably tubular woven, and typically would have about a 40°-50° bias slit. Polyester, nylon, rayon, Kevlar, or blends of two or more of these fibers, are all suitable constituents of the fabric. In order to be most effective, the fabric should have a maximum opening size (the size of interstices) comparable to a 7.5/S yarn size at a 28x28 count per inch, with a weight of 6.25 oz. per square yard. Lighter weight fabrics woven with 12.0/S yarn at a count of 50x 50 per inch, with a weight per square yard of about 5.7 oz. are particularly suitable. The wrapping of the V-belt with the cover fabric is entirely conventional.

Examples of specific fabrics and V-belts that can be produced within the scope of the invention are as follows:

Examples 1:

A tubular woven 7.5/1 50/50 cotton/polyester fabric is bias cut at a 45° angle off the warp and filling yarns into a continuous strip 63 inches wide. The bias slit fabric is overfed at about 40% onto the pins of a tenter frame. The width of the fabric is expanded on the tenter frame to spread the angle at yarn crossover from about 90° to about 110°. After the angle is expanded, the fabric is coated on the top side only with a solvated neoprene cement with a viscosity of about 80,000 cps. The coating is applied with a 1/8 inch square coating knife over roll designed to lay the coating on the fabric surface, leaving the opposite (bottom) side of the fabric absolutely clean. The fabric is then dried in the frame oven, cooled, slit and batched into rolls at the exit of the frame. The produced fabric is used to wrap around V-belts, and the V-belts produced have a much lower co-efficient of friction on the outer surface thereof than conventional friction calendered fabric wrapped V-belts. The outer surface of the fabric cover is white in color, as compared to the gray color of the outer surface of the wrapped friction calendered fabric.

Example 2:

A tubular woven 7.5/1 50/50 cotton/polyester fabric is bias cut at a 45° angle off the warp and filling yarns, into a continuous strip 63 inches wide. A neoprene solvated to a viscosity of about 80,000 cps is applied to one side of the bias slit fabric by a roll-type applicator in front of a pin tenter frame. After the rubber is applied, the fabric is overfed at about 40% onto the pins of the tenter frame where the fabric width is expanded to spread the angle of the yarn crossovers from about 90° to about 110°. The fabric is then dried in a conventional tenter frame oven, cooled, slit, and batched into rolls at the exit of the tenter frame. The fabric is then used to wrap V-belts. The V-belts so produced have a significantly lower co-efficient of friction than friction calendered fabric wrapped V-belts. The outer surface of the fabric cover is white in color, as compared to the gray color of the outer surface of the wrapped friction calendered fabric. While this Example produces satisfactory results, the procedure in Example 1 is preferred since the coating add-on can be controlled with tighter tolerances according to the Example 1 procedure, since the fabric width at coating is the same as in the final finished fabric.

While the invention has been described with respect to specific examples and ranges above, it is to be understood that a wide variety of variations are within the scope of the invention. The fabric construction and the coating mix viscosity, as well as other parameters, can be varied significantly to achieve desired results, i.e. control the amount of penetration of the fabric with elastomeric material so as to minimize the co-efficient of friction of the outer surface. Thus, the invention is to be accorded the broadest interpretation of the appended claims so as to encompass all equivalent products and procedures.

**Claims**

1. A covered V-belt having a low co-efficient of friction on the outer surface thereof, comprising:
a body portion (27) primarily of elastomeric material; and a fabric portion (22) wrapped around the body portion; characterized in that said fabric portion has an inner surface (24) coated with elastomeric material engaging said body portion, and an outer surface (25) substantially devoid of any elastomeric material, so that the outer surface becomes slick, with a low co-efficient of friction, during use.

2. A covered V-belt as recited in claim 1 further characterized in that the fabric has interstices between the inner and outer surfaces thereof, and wherein the elastomeric material coating the inner surface of the fabric does not fill the interstices.

3. A covered V-belt as recited in claim 2 further characterized in that said fabric has a weight between about 5.0 oz. per square yard and about 10.0 oz. per square yard.

4. A covered V-belt as recited in claim 2 further characterized in that said fabric is selected from the group consisting of tubular woven fabrics and square woven fabrics.

5. A covered V-belt as recited in claim 4 further characterized in that said fabric is formed of fibers selected from the group consisting of cotton, polyester, nylon, rayon, Kevlar, and blends of two or more of cotton, polyester, nylon, rayon, and Kevlar.

6. A method of producing a covered V-belt having a body (27) primarily of elastomeric material covered with a fabric (22), characterized by the steps of:
(a) applying to a first surface (24) of a fabric having first and second (25) opposite surfaces, with interstices therebetween, a viscous elastomeric coating so that the elastomeric material covers the first surface but does not fill the interstices; and
(b) wrapping the fabric around a V-belt body with the first surface engaging the V-belt, so that the second surface forms the exterior of the covered V-belt.

7. A method as recited in claim 6 further characterized in that step (a) is practiced by applying a viscous elastomeric coating material at a viscosity in the range of about 40,000-100,000 cps.

8. A method as recited in claim 7 further characterized in that step (a) is practiced utilizing a knife over a roll or table on a pin tenter frame.

9. A method as recited in claim 6 further characterized in that step (a) is practiced utilizing a fabric having as the maximum size of the openings (interstices) thereof the size of interstices of a fabric with a 7.5/S yarn size at a 28x28 count per inch and a fabric weight of 6.25 oz. per square yard.

10. A method of producing a covered V-belt having a body (27) primarily of elastomeric material covered with a fabric (22), comprising the steps of substantially sequentially:

(a) bias cutting the woven fabric (22);

(b) overfeeding the bias cut fabric to a tenter frame;

(c) expanding the fabric on the tenter frame so that the fabric angle at yarn crossover is in the range of 90°-130°;

(d) drying the elastomeric material coating;

(e) cooling the fabric; and

(f) slitting the fabric; and characterized by the further steps of

(g) between steps (a) and (b), coating a first surface (24) of the fabric with an elastomeric material having a viscosity between about 40,000-100,000 cps; and

(h) wrapping the slit fabric around the V-belt body so that the first surface of the fabric contacts the V-belt body to produce a covered V-belt.

*FIG. 1*

*FIG. 2*

*FIG. 3*

*FIG. 4*

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-3 924 482 (MEADOWS) * Column 2, lines 29-39; column 4, lines 60-65; column 5, lines 41-59; figure 3 * | 1,4,6 | F 16 G 5/00 |
| A | | 10 | |
| A | US-A-4 504 258 (TANAKA) * Column 4, lines 8-16; figure 5 * | 5 | |
| A | US-A-2 793 151 (ARNETT) * Whole document * | 5 | |
| A | US-A-3 784 427 (GRIFFIN) * Column 2, line 38 - column 3, line 53; figure * | 4,5,10 | |
| A | GB-A- 868 916 (RAYBESTOS-MANHATTAN) | | |

| | | | TECHNICAL FIELDS SEARCHED (Int. Cl.4) |
|---|---|---|---|
| | | | F 16 G B 29 D |

The present search report has been drawn up for all claims

| Place of search | Date of completion of the search | Examiner |
|---|---|---|
| THE HAGUE | 31-05-1989 | BARON C. |

EPO FORM 1503 03.82 (P0401)